# EUROPEAN PATENT APPLICATION

(11) **EP 3 863 133 A1**
(43) Date of publication of application: **11.08.2021**
(21) Application number: 21152459.0
(22) Date of filing: 20.01.2021
(51) Int. Cl.: H02B 1/36, H02B 11/133

(54) **IMPROVED SAFETY MECHANISM FOR AN ELECTRICAL SYSTEM WITH AN ELECTRICAL SWITCHGEAR AND A SLIDE-IN UNIT**

(30) Priority: 05.02.2020 IN 202011004999; 11.05.2020 GB 202006901
(71) Applicant: Eaton Intelligent Power Limited, Dublin 4 (IE)
(72) Inventor: Sengupta, Himadri, 411028 Pune (IN); Chiman, Anand, 411014 Pune (IN); GATTRINGER, Thomas, 3943 Schrems (AT); Konegen, Reinhold, 40764 Mettmann (DE)
(74) Representative: Eaton IP Group EMEA

(57) **Abstract**

An electrical system (1) is disclosed, which comprises a slide-in unit (3, 3a, 3b) and a switchgear (2) with a compartment (A) for receiving the same. The switchgear (2) comprises first and second switchgear connectors (5, 6) in the compartment (A). The slide-in unit (3, 3a, 3b) comprises first slide-in connectors (10), which get connected/disconnected to the first switchgear connectors (5) at a first slide-in position (P1) of the slide-in unit (3, 3a, 3b), and second slide-in connectors (11), which get connected/disconnected to the second switchgear connectors (6) at a second slide-in position (P2). Moreover, the slide-in unit (3, 3a, 3b) comprises a contactor (12) between the first slide-in connectors (10) and the second slide-in connectors (11) and a safety mechanism, which switches or enables to switch the contactor (12) ON at a third slide-in position (P3) and OFF at a fourth slide-in position (P4) of the slide-in unit (3, 3a, 3b). The third slide-in position (P3) is reached after the first slide-in position (P1) when inserting the slide-in unit (3, 3a, 3b), and the fourth slide-in position (P4) is reached before the first slide-in position (P1) when removing the slide-in unit (3, 3a, 3b).

## Description

### TECHNICAL FIELD

The invention relates to an electrical system, which comprises a switchgear and a slide-in unit. The switchgear comprises a compartment for receiving the detachable slide-in unit, a power system, first switchgear connectors, which are electrically connected to the power system and which are arranged in the compartment for the slide-in unit, and second switchgear connectors, which are arranged in the compartment for the slide-in unit. The slide-in unit, which is designed to be inserted in said compartment of the switchgear, comprises first slide-in connectors, second slide-in connectors and a (at least one) contactor arranged in the electrical path between the first slide-in connectors and the second slide-in connectors. The first slide-in connectors get electrically connected to the first switchgear connectors at a first slide-in position of the slide-in unit when the slide-in unit is inserted into the compartment of the switchgear and get electrically disconnected from the first switchgear connectors at said first slide-in position when the slide-in unit is removed from the compartment of the switchgear. In a similar way, the second slide-in connectors get electrically connected to the second switchgear connectors at a second slide-in position of the slide-in unit when the slide-in unit is inserted into the compartment of the switchgear and get electrically disconnected from the second switchgear connectors at said second slide-in position when the slide-in unit is removed from the compartment of the switchgear. The first slide-in connectors are electrically connected to the second slide-in connectors in the ON-state of the contactor and are electrically disconnected from the second slide-in connectors in the OFF-state of the contactor.

### BACKGROUND ART

An electrical system as outlined above is known in prior art. Slide-in units are used to modularize the structure of a switchgear in general. They may be inserted statically, that means as long as they work and do not have to be removed for maintenance or repair, or temporarily, that means as long as they are needed and hence for a comparably short period of time. Inserting and removing a slide-in units is a critical act, in particular when this is done in the live status of the electrical system, i.e. when power is switched on.

It is known that a slide-in unit can comprise a mechanical switch, which is arranged in series with the contactor and which can be operated by hand from the front panel of the slide-in unit to switch the slide-in unit ON and OFF. However, in that case handling with a slide-in unit needs some knowledge and in particular the attention of personnel, because a given inserting and removal sequence must be followed to ensure the correct function of the electrical system and to ensure safety for the personnel when the slide-in unit is moved into or removed from the compartment of the switchgear. More complicated systems require a manual to be read before the slide-in unit is moved into or removed from the compartment.

### DISCLOSURE OF INVENTION

Accordingly, a problem of the invention is to provide an improved electrical switchgear. In particular, usage of a slide-in unit shall be eased in terms of the required knowledge and attention of the personnel.

The problem of the invention is solved by an electrical system as defined in the opening paragraph, which additionally comprises a safety mechanism, which is provided to switch ON the contactor or which is provided to enable switching ON the contactor at a third slide-in position of the slide-in unit (and inhibits switching ON the contactor at a position different to the third slide-in position), wherein the third slide-in position is reached after the first slide-in position when the slide-in unit is inserted into the compartment of the switchgear, and which is provided to switch OFF the contactor at a fourth slide-in position of the slide-in unit, wherein the fourth slide-in position is reached before the first slide-in position when the slide-in unit is removed from the compartment of the switchgear.

In detail, the slide-in unit is designed to be inserted into said compartment of the switchgear by a slide-in movement and designed to be removed from the compartment of the switchgear by a slide-out movement.

The above definition of the first/second slide-in connectors also means that the first/second slide-in connectors are electrically connected to the first/second switchgear connectors between a first/second slide-in position of the slide-in unit and a position, where the slide-in unit is fully inserted into the compartment in the switchgear, and are electrically disconnected from the first/second switchgear connectors between said first/second slide-in position and a position, where the slide-in unit is removed from the compartment of the switchgear. In other words, the first/second slide-in connectors are electrically connected to the first/second switchgear connectors beyond a first/second slide-in position of the slide-in unit in a direction facing a position, where the slide-in unit is fully inserted into the compartment in the switchgear, and are electrically disconnected from the first/second switchgear connectors beyond said first/second slide-in position in a direction facing a position, where the slide-in unit is removed from the compartment of the switchgear.

The first switchgear connectors are electrically connected to the power system and are usually energized when the slide-in unit is inserted into or removed from the compartment of the switchgear unless main power supply is explicitly switched off before by means of an upstream main switch what however is no condition for inserting or removing the slide-in unit.

The second switchgear connectors can be connected to an electrical load like an electric motor. The second switchgear connectors are usually de-energized when the slide-in unit is inserted into or removed from the compartment of the switchgear. However, it may also happen that the second switchgear connectors are energized, for example when an electric motor connected to the second switchgear connectors is in generator operation.

"Switch ON" in detail means changing the switching state from OFF to ON and "switch OFF" in detail means changing the switching state from ON to OFF.

The above definition of the switching state of the contactor also means that the contactor keeps its ON-state between the third slide-in position of the slide-in unit and a position, where the slide-in unit is fully inserted into the compartment in the switchgear, and that the contactor keeps its OFF-state between the fourth slide-in position of the slide-in unit and a position, where the slide-in unit is fully removed from the compartment in the switchgear. In other words, the contactor keeps its ON-state beyond the third slide-in position of the slide-in unit in a direction facing a position, where the slide-in unit is fully inserted into the compartment in the switchgear, and keeps its OFF-state beyond said fourth slide-in position in a direction facing a position, where the slide-in unit is removed from the compartment of the switchgear.

By use of the above measures, the contactor is electrically connected to the power system of the switchgear before power is switched ON in the slide-in unit, and power is switched OFF in the slide-in unit before the contactor is electrically disconnected from the power system of the switchgear automatically. No special knowledge and no special attention of the personnel is needed when a slide-in unit is inserted into or removed from the compartment of the switchgear.

It should be noted that one or more contactors can be arranged in the electrical path between the first slide-in connectors and the second slide-in connectors. In case that more contactors are arranged in said electrical path, the aforementioned safety mechanism may act one of the more contactors, one some of the more contactors or on all said contactors. In particular, the plurality of contactors is switched in series in said electrical path.

Further advantageous embodiments are disclosed in the claims and in the description as well as in the figures.

Advantageously, the third slide-in position is reached after the second slide-in position when the slide-in unit is inserted into the compartment of the switchgear, and the fourth slide-in position is reached before the second slide-in position when the slide-in unit is removed from the compartment of the switchgear. In this case, the contactor is electrically connected to the second switchgear connectors (and thus to an electrical load for example) before the contactor is switched ON, and the contactor is switched OFF before the contactor is electrically disconnected from the second switchgear connectors (and thus from an electrical load for example). This embodiment is of advantage if the second switchgear connectors can be energized, for example when an electric motor connected to the second switchgear connectors can be in generator operation, because electrical connection and disconnection takes place in an high-impedance state of the second slide-in connectors what avoids arc flashes between the second slide-in connectors and the second switchgear connectors and other disadvantageous effects.

It is also advantageous if the third slide-in position is reached before the second slide-in position when the slide-in unit is inserted into the compartment of the switchgear, and the fourth slide-in position is reached after the second slide-in position when the slide-in unit is removed from the compartment of the switchgear. In this case, the contactor is electrically connected to the second switchgear connectors (and thus to an electrical load for example) after the contactor is switched ON and the contactor is switched OFF after the contactor is electrically disconnected from the second switchgear connectors (and thus from an electrical load for example). In particular, this embodiment can be used if the second switchgear connectors are de-energized when connecting, because the switching state of the contactor does not influence the electrical connection and disconnection between the second slide-in connectors and the second switchgear connectors then.

In a further beneficial embodiment of the electrical system, the first slide-in position coincides with the second slide-in position and forms a combined first and second slide-in position and/or the third slide-in position coincides with the fourth slide-in position and forms a combined third and fourth slide-in position. In this way, electrical connection and electrical disconnection between the first slide-in connectors and the first switchgear connectors as well as between the second slide-in connectors and the second switchgear connectors is done at the same position. Alternatively or in addition, switching ON the contactor and switching OFF the contactor may be done at the same position. However, the first slide-in position may also be different from the second slide-in position and/or the third slide-in position may also be different from the fourth slide-in position. In this context, the first slide-in position can be reached before or after the second slide-in position and/or the third slide-in position can be reached before or after the fourth slide-in position.

Different first and second slide-in positions mean that the contactor is connected to the power system of the switchgear and to the second switchgear connectors (e.g. to a load) at different positions. A particular connecting sequence may be useful for ensuring the correct performance of components in the electrical system (e.g. switching devices, circuit breakers, communication modules, displays, etc.) in case that said performance depends on a particular "boot"-sequence. If the sequence is not followed, then the performance of said component can get affected adversely. This sequence can also have an impact on safety as well (e.g. in view of arcing and persons who can touch the live side, etc.)

Different third and fourth slide-in positions in particular mean that there is a switching hysteresis, which is beneficial to avoid indefinite ON/OFF states. Usually, the fourth position is reached after the third position when the when the slide-in unit is removed from the compartment of the switchgear.

In a very advantageous embodiment of the electrical system, the contactor is the only switching device between the first slide-in connectors and the second slide-in connectors. Hence, the electrical system and in particular the slide-in unit is easy to manufacture and very reliable at the same time.

Beneficially, a fuse is arranged in the electrical path between the first slide-in connectors and the second slide-in connectors. In this way, devices in the electrical path between the first slide-in connectors and the second slide-in connectors can be protected against over current.

In a very advantageous embodiment of the electrical system, the contactor and the fuse are the only current interrupting devices between the first slide-in connectors and the second slide-in connectors. Thus, the electrical system and in particular the slide-in unit is easy to manufacture and very reliable at the same time.

In another advantageous embodiment of the electrical system, the safety mechanism is provided to mechanically lock the slide-in unit when the slide-in unit is fully inserted into the compartment in the switchgear. In this way, unintentional removal of the slide-in unit from the compartment of the switchgear is avoided.

In yet another advantageous embodiment of the electrical system, the safety mechanism is provided
a) to turn OFF the contactor in the UNLOCKED state of the slide-in unit and/or
b) to turn ON the contactor in the LOCKED state of the slide-in unit or to enable the contactor to be turned ON and OFF in the LOCKED state of the slide-in unit.

In this way, the safety mechanism ensures that the slide-in unit cannot unintentionally be removed of from the compartment of the switchgear as long as the slide-in unit is connected to the power system of the switchgear.

Further on, it is very advantageous if the safety mechanism comprises a first switch, which is electrically connected to the control coil of the contactor, wherein the first switch is switched ON or enabled to be switched ON at the third slide-in position of the slide-in unit when the slide-in unit is inserted into the compartment of the switchgear, and which is provided to be switched OFF at the fourth slide-in position of the slide-in unit when the slide-in unit is removed from the compartment of the switchgear. In turn, the contactor is switched ON or is enabled to be switched ON at the third slide-in position of the slide-in unit when the slide-in unit is inserted into the compartment of the switchgear, and is switched OFF at the fourth slide-in position of the slide-in unit when the slide-in unit is removed from the compartment of the switchgear.

Finally, it is very advantageous if the electrical system comprises
i) a second switch, which is connected in series with the first switch, is accessible for an operator on a front side of the slide-in unit (even) when the slide-in unit is fully inserted into the compartment in the switchgear and/or can be operated by the operator remotely (from a remote site) or
ii) said first switch is accessible for an operator on a front side of the slide-in unit (even) when the slide-in unit is fully inserted into the compartment in the switchgear and/or can be operated by the operator remotely (from a remote site), wherein the first switch can be switched ON by the operator when the first switch is enabled to be switched ON by the safety mechanism (and can be switched OFF at any time).

In this way, the contactor (and hence the load connected thereto) can manually be switched ON and OFF (depending on whether the slide-in unit is inserted or not).

### BRIEF DESCRIPTION OF DRAWINGS

The invention now is described in more detail hereinafter with reference to particular embodiments, which the invention however is not limited to.
- Fig. 1: shows an exemplary electrical system with a switchgear and a slide-in unit in oblique view;
- Fig. 2: shows a schematic top view of the electrical system;
- Fig. 3: shows the electrical system of Fig. 2 in a non-operating position;
- Fig. 4: shows the slide-in unit of the electrical system of Fig. 2 in a combined first and second slide-in position;
- Fig. 5: shows the slide-in unit of the electrical system of Fig. 2 in a third slide-in position;
- Fig. 6: shows the slide-in unit of the electrical system of Fig. 2 in a fourth slide-in position;
- Fig. 7: shows an electrical system with a push rod on the left side of the slide-in unit in a non-operating position;
- Fig. 8: shows the slide-in unit of the electrical system of Fig. 7 in a combined first and second slide-in position;
- Fig. 9: shows the slide-in unit of the electrical system of Fig. 7 in a third slide-in position;
- Fig. 10: shows the slide-in unit of the electrical system of Fig. 7 in a fourth slide-in position;
- Fig. 11: shows an electrical system with a first switch and a lock in a non-operating position;
- Fig. 12: shows the slide-in unit of the electrical system of Fig. 11 in a fully inserted position;
- Fig. 13: shows an electrical system with a wireless second switch in a non-operating position;
- Fig. 14: shows an electrical system with a mechanical second switch in a non-operating position;
- Fig. 15: shows an electrical system with a mechanical switch, which is blocked by a blocking rod, in a non-operating position;
- Fig. 16: shows the slide-in unit of the electrical system of Fig. 15 in a fully inserted position with the switch being released by the blocking rod;
- Fig. 17: shows an electrical system with a contactor, which is blocked by a blocking rod, in a fully inserted position;
- Fig. 18: shows a slide-in unit of the electrical system in a combined third and fourth slide-in position;
- Fig. 19: shows a slide-in unit of the electrical system in a first slide-in position, which is reached before the second slide-in position when the slide-in unit is inserted into the compartment;
- Fig. 20: shows a slide-in unit of the electrical system in a second slide-in position, which is reached before the first slide-in position when the slide-in unit is inserted into the compartment;
- Fig. 21: shows a slide-in unit of the electrical system, wherein the third and the fourth slide-in position are located between the first and second slide-in position;
- Fig. 22: shows a slide-in unit of the electrical system with the first slide-in connector, the second slide-in connector and the first switch being arranged on the right side of the slide-in unit;
- Fig. 23: shows a slide-in unit with a fuse switched in series with the contactor in a more detailed top view and
- Fig. 24: shows a slide-in unit with a fuse and a second switch switched in series with the contactor in a more detailed top view.

### DETAILED DESCRIPTION

Generally, same parts or similar parts are denoted with the same/similar names and reference signs. The features disclosed in the description apply to parts with the same/similar names respectively reference signs. Indicating the orientation and relative position (up, down, sideward, etc) is related to the associated figure, and indication of the orientation and/or relative position has to be amended in different figures accordingly as the case may be.

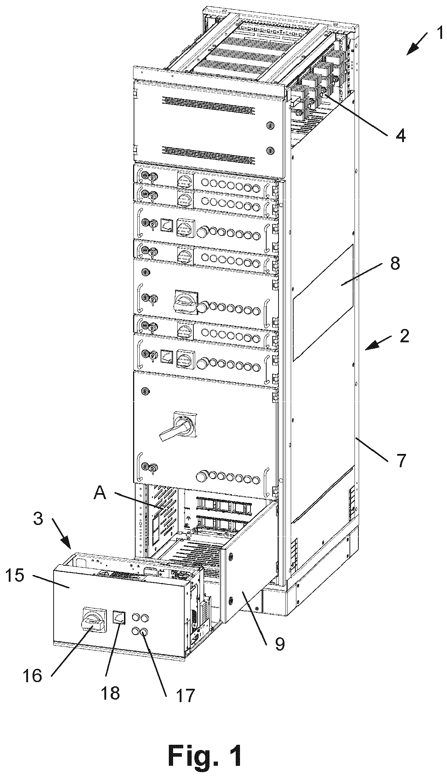

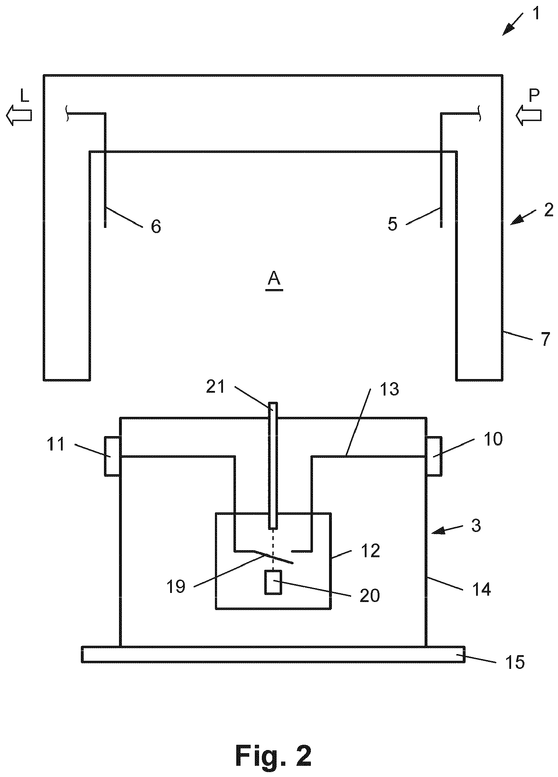

Figures 1 and 2 show an example of an electrical system 1, wherein Fig. 1 shows the electrical system 1 in oblique view and wherein Fig. 2 shows a schematic top view of the electrical system 1. The electrical system 1 comprises a switchgear 2 with a compartment A for receiving a detachable slide-in unit 3, busbars 4, first switchgear connectors 5, which are electrically connected to a power system P via the busbars 4 and which are arranged in the compartment A for the slide-in unit 3, and second switchgear connectors 6, which are arranged in the compartment A for the slide-in unit 3 as well. Note that the busbars 4 as such due to the above connection are part of the power system P as well.

In more detail, the switchgear 2 moreover comprises a frame 7, a housing 8 and an optional door 9 for closing the compartment A. In this example the second switchgear connectors 6 are connected to a load L what however is no necessary condition.

In addition, the electrical system 1 comprises the slide-in unit 3 as such, which is designed to be inserted in the compartment A of the switchgear 2. The slide-in unit 3 comprises first slide-in connectors 10, second slide-in connectors 11 and a contactor 12 arranged in the electrical path 13 formed by wiring in this example between the first slide-in connectors 10 and the second slide-in connectors 11. The first slide-in connectors 10 are electrically connected to the second slide-in connectors 11 in the ON-state of the contactor 12 and are electrically disconnected from the second slide-in connectors 11 in the OFF-state of the contactor 12.

In more detail, the slide-in unit 3 comprises a main body 14 housing the contactor 12 and a front panel 15 connected thereto. In this example, also the first slide-in connectors 10 and the second slide-in connectors 11 are connected to the main body 14. In addition, the slide-in unit 3 comprises optional operating elements on the front panel 15, here a handle 16, push buttons 17 and a gauge 18.

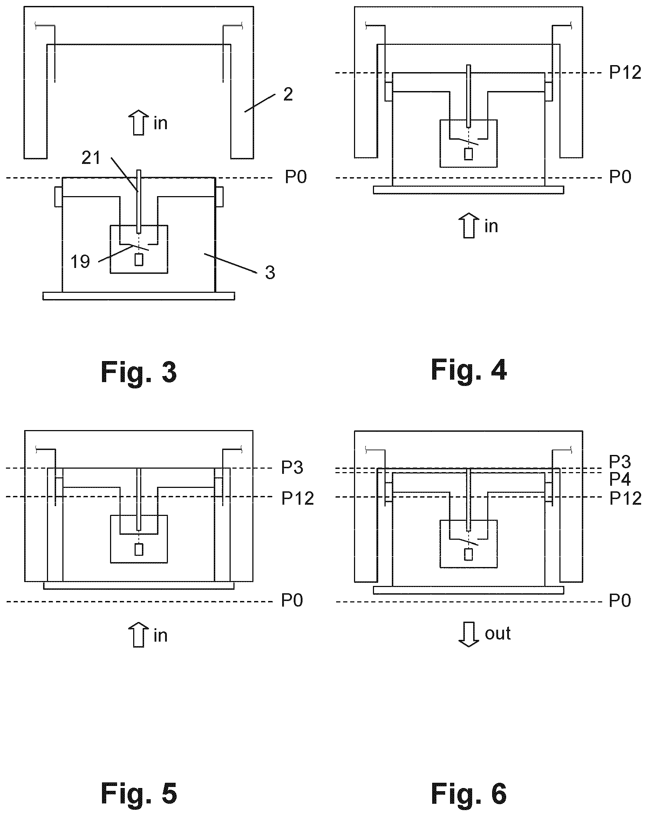

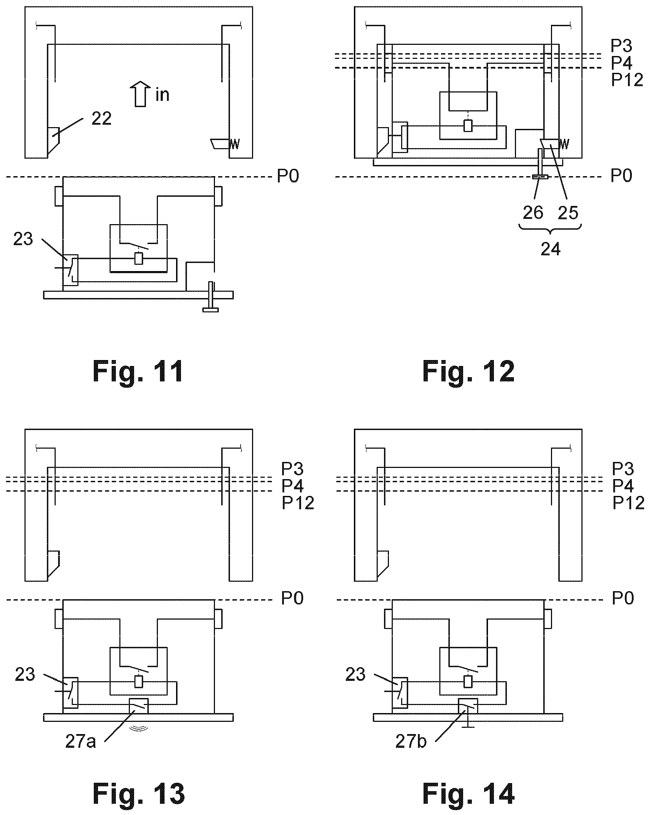

The contactor 12 comprises a switching contact 19 and a control coil (switching coil) 20. In addition, the slide-in unit 3 comprises a push rod 21, which acts on the switching contact 19 of the contactor 12, too. Accordingly, the switching contact 19 can be operated electrically by powering the switching coil 20 or mechanically by moving the push rod 21. The push rod 21 forms a safety mechanism of the electrical system 1 which is explained in more detail hereinafter by reference to the Figs. 3 to 6. It should be noted however that a combined mechanical and electrical operation of the contactor 12 is no necessary condition for the invention and a pure electrical operation by means of the control coil 20 is possible as well (see Figs. 11 to 16 for example).

Figs. 3 to 6 show the electrical system 1 in different states now. In detail, Fig. 3 shows the electrical system 1 when the slide-in unit 3 is removed from the compartment A of the switchgear 2 in a non-operating position P0. Fig. 4 shows the electrical system 1 when the slide-in unit 3 has been moved into the compartment A of the switchgear 2 to a combined first and second position P12 (see also the "in"-arrow indicating the insert direction of the slide-in unit 3).

Generally, the first slide-in connectors 10 get electrically connected to the first switchgear connectors 5 at a first slide-in position of the slide-in unit 3 when the slide-in unit 3 is inserted into the compartment A of the switchgear 2 and get electrically disconnected from the first switchgear connectors 5 at said first slide-in position when the slide-in unit 3 is removed from the compartment A of the switchgear 2. Similarly, the second slide-in connectors 11 get electrically connected to the second switchgear connectors 6 at a second slide-in position of the slide-in unit 3 when the slide-in unit 3 is inserted into the compartment A of the switchgear 2 and get electrically disconnected from the second switchgear connectors 6 at said second slide-in position when the slide-in unit 3 is removed from the compartment A of the switchgear 2. This first slide-in position does not necessarily differ from the second slide-in position, but the first slide-in position may coincide with the second slide-in position and form a combined first and second slide-in position P12 what is the case in the example shown in Figs. 3 to 6. Accordingly, the combined first and second slide-in position P12 substitutes both the first slide-in position and the second slide-in position in the above explanation. In this way, electrical connection and electrical disconnection between the first slide-in connectors 10 and the first switchgear connectors 5 as well as between the second slide-in connectors 11 and the second switchgear connectors 6 is done at the same combined first and second slide-in position P12.

It should be noted at this point, that the first switchgear connectors 5, the second switchgear connectors 6, the first slide-in connectors 10 and the second slide-in connectors 11 are depicted in a simplified way and may look more complicated in reality. In particular, the Figures do not explicitly show each single connector of the first switchgear connectors 5, the second switchgear connectors 6, the first slide-in connectors 10 and the second slide-in connectors 11. However, in reality, each of the first switchgear connectors 5, the second switchgear connectors 6, the first slide-in connectors 10 and the second slide-in connectors 11 may comprise a plurality of single connectors which may get in contact at different positions.

For example, there may be three first switchgear connectors 5 which get in contact with three first slide-in connectors 10 at different first positions, and there may be three second switchgear connectors 6 which get in contact with three second slide-in connectors 11 at different second positions (again three combined first and second slide-in position P12 may substitute the three first slide-in positions and the three second slide-in positions in the above explanation). However, for the sake of simplicity, different first positions are considered as a single first slide-in position, different second positions are considered as a single second slide-in position and different combined first and second slide-in positions P12 are considered as a single first and second slide-in positions P12 in this application.

In particular, the single first slide-in position may seen as that position, where all first slide-in connectors 10 get electrically connected to the first switchgear connectors 5 when the slide-in unit 3 is inserted into the compartment A and where at least one of first slide-in connectors 10 get electrically disconnected from the first switchgear connectors 5 when the slide-in unit 3 is removed from the compartment A. Similarly, the second first slide-in position may seen as that position, where all second slide-in connectors 11 get electrically connected to the second switchgear connectors 6 when the slide-in unit 3 is inserted into the compartment A and where at least one of second slide-in connectors 11 get electrically disconnected from the second switchgear connectors 6 when the slide-in unit 3 is removed from the compartment A. Again a combined first and second slide-in position P12 may substitute the first slide-in position and the second slide-in position in the above explanation.

The above explanation in particular refers to three-phase systems, which the electrical system 1 is not limited to. In contrast there may be a number of single connectors different from three.

Fig. 5 now shows the electrical system 1 when the slide-in unit 3 has been fully moved into the compartment A of the switchgear 2 to a third slide-in position P3, and Fig. 6 shows the electrical system 1 when the slide-in unit 3 has been slightly pulled out of the compartment A of the switchgear 2 to a fourth slide-in position P4 (see also the "out"-arrow indicating the removal direction of the slide-in unit 3).

The safety mechanism, which is formed by the push rod 21 here, switches the contactor 12 ON at the third slide-in position P3 and switches the contactor 12 OFF at the fourth slide-in position P4.

Figs. 4 and 6 clearly show that the third slide-in position P3 is reached after the combined first and second slide-in position P12 (and thus after the first slide-in position and after the second slide-in position) when the slide-in unit 3 is inserted into the compartment A of the switchgear 2 (see the "in"-arrow) and that the fourth slide-in position P4 is reached before the combined first and second slide-in position P12 (and thus before the first slide-in position and before the second slide-in position) when the slide-in unit 3 is removed from the compartment A of the switchgear 2 (see the "out"-arrow).

By use of the above measures, the contactor 12 is electrically connected to the power system P of the switchgear 2 before power is switched ON in the slide-in unit 3, and power is switched OFF in the slide-in unit 3 before the contactor 12 is electrically disconnected from the power system P of the switchgear 2. The first switchgear connectors 5 are usually energized when the slide-in unit 3 is inserted into the compartment A or removed from the compartment A unless main power supply is explicitly switched off by means of an upstream main switch what however is no condition for inserting or removing the slide-in unit 3. By the above measures, electrical connection and disconnection takes place in an high-impedance state of the first slide-in connectors 10 what avoids arc flashes between the first slide-in connectors 10 and the first switchgear connectors 5 and other disadvantageous effects. Moreover, no special knowledge and no special attention of the personnel is needed when the slide-in unit 3 is inserted into or removed from the compartment A of the switchgear 2.

In the example shown in Figs. 3 to 6, the contactor 12 moreover is electrically connected to the second switchgear connectors 6 (and thus to an electrical load L for example) before the contactor 12 is switched ON, and the contactor 12 is switched OFF before the contactor 12 is electrically disconnected from the second switchgear connectors 6 (and thus from an electrical load L for example). This embodiment is of advantage if the second switchgear connectors 6 can be energized, for example when an electric motor connected to the second switchgear connectors 6 is in generator operation. By the proposed measures, electrical connection and disconnection takes place in an high-impedance state of the second slide-in connectors 11 what avoids arc flashes between the second slide-in connectors 11 and the second switchgear connectors 6 and other disadvantageous effects. However, it should be noted that the second switchgear connectors 6 are not necessarily energized when the slide-in unit 3 is inserted into the compartment A, but they may also be de-energized.

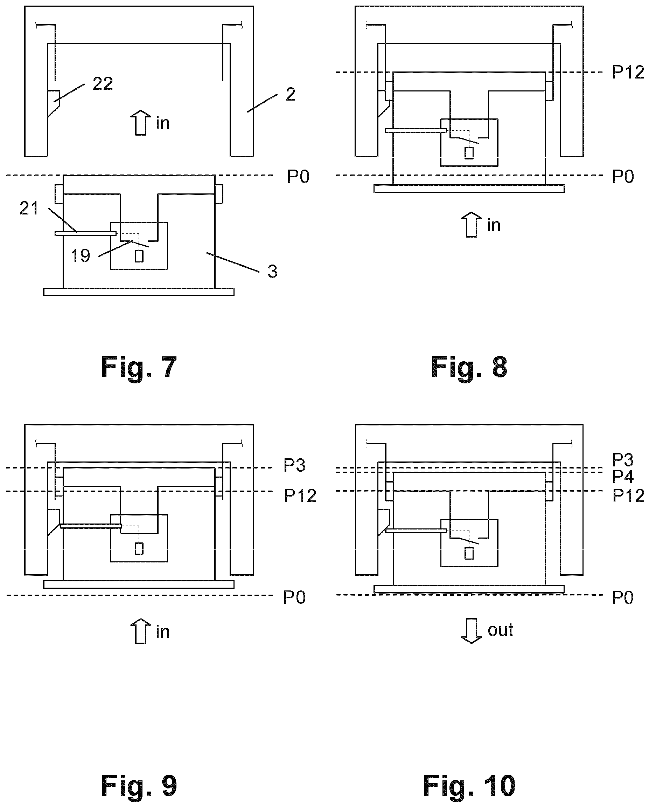

The example shown in Figs. 7 to 10 is pretty similar to the one shown in Figs. 3 to 6. In contrast, the pushrod 21 is not arranged on the backside of the slide-in unit 3, but on its left side. Further on, a switching bump 22 is arranged on the left side of the compartment A. Here, the contactor 12 between the first switchgear connectors 5 and the second switchgear connectors 6 is switched ON at the third slide-in position P3 by means of the switching bump 22 acting on the pushrod 21 when the slide-in unit 3 is moved into the compartment A, and the contactor 12 is switched OFF at the fourth slide-in position P4 when the slide-in unit 3 is moved out of the compartment A. Again, the third slide-in position P3 and the fourth slide-in position P4 are beyond the combined first and second slide-in position P12 viewed in insert direction "in".

Figs. 11 and 12 show an further similar embodiment. However, in contrast there is no pushrod 21 acting on the switching contact 19 of the contactor 12, but there is a first switch 23 acting on the control coil 20 of the contactor 12. In addition, the embodiment shown in Figs. 11 and 12 comprises a lock 24 with a spring biased latch 25 and a release button 26. The lock 24, which is part of the safety mechanism, mechanically locks the slide-in unit 3 when the slide-in unit 3 is fully inserted into the compartment A by means of the latch 25. To remove the slide-in unit 3, the release button 26, which pushes back the latch 25, is to be pressed. In this way, unintentional removal of the slide-in unit 3 from the compartment A of the switchgear 2 is avoided.

The first switch 23, which is part of the safety mechanism as well, is switched ON or enabled to be switched ON at the third slide-in position P3 of the slide-in unit 3 when the slide-in unit 3 is inserted into the compartment A of the switchgear 2, and is switched OFF at the fourth slide-in position P4 of the slide-in unit 3 when the slide-in unit 3 is removed from the compartment A. In turn, the contactor 12 is switched ON or is enabled to be switched ON at the third slide-in position P3 of the slide-in unit 3 when the slide-in unit 3 is inserted into the compartment A, and is switched OFF at the fourth slide-in position P4 of the slide-in unit 3 when the slide-in unit 3 is removed from the compartment A.

Again the third slide-in position P3 is reached after the combined first and second slide-in position P12 (and thus after the first slide-in position and after the second slide-in position) when the slide-in unit 3 is inserted into the compartment A of the switchgear 2 (see the "in"-arrow) and the fourth slide-in position P4 is reached before the combined first and second slide-in position P12 (and thus before the first slide-in position and before the second slide-in position) when the slide-in unit 3 is removed from the compartment A of the switchgear 2 (see the "out"-arrow). Accordingly, the advantages presented to the embodiments of Figs. 2 to 10 apply to the embodiment of Figs. 11 and 12 as well. One should also note that the third slide-in position P3 and the fourth slide-in position P4 are not explicitly shown for the sake of conciseness, but one will easily understand that the first switch 23 is operated by the switching bump 22 at these positions.

The embodiment of Fig. 13 is pretty similar to that of Figs. 11 and 12. In contrast, the lock 24 is omitted and the electrical system 1 comprises a wireless second switch 27a, which is connected in series with the first switch 23 and which can be operated by an operator remotely. In this way, the contactor 12 (and hence the load L connected thereto) can manually be switched ON and OFF. Because of the first switch 23, the contactor 12 is only switched ON when both the first switch 23 and the second switch 27a are switched ON. In other words, the contactor 12 only can be switched ON after the third slide-in position P3 has been reached when the slide-in unit 3 is inserted into the compartment A and cannot be switched ON after the fourth slide-in position P4 has been reached when the slide-in unit 3 is removed from the compartment A.

The embodiment of Fig. 14 is pretty similar to that of Fig. 13. In contrast the electrical system 1 comprises a mechanically operated second switch 27b, which is connected in series with the first switch 23. This second switch 27b is accessible for an operator on a front side of the slide-in unit 3, even when the slide-in unit 3 is fully inserted into the compartment A in the switchgear 2. Again, the contactor 12 (and hence the load L connected thereto) can manually be switched ON and OFF dependent on the switching state of the first switch 23 as outlined above in the context of the embodiment of Fig. 13.

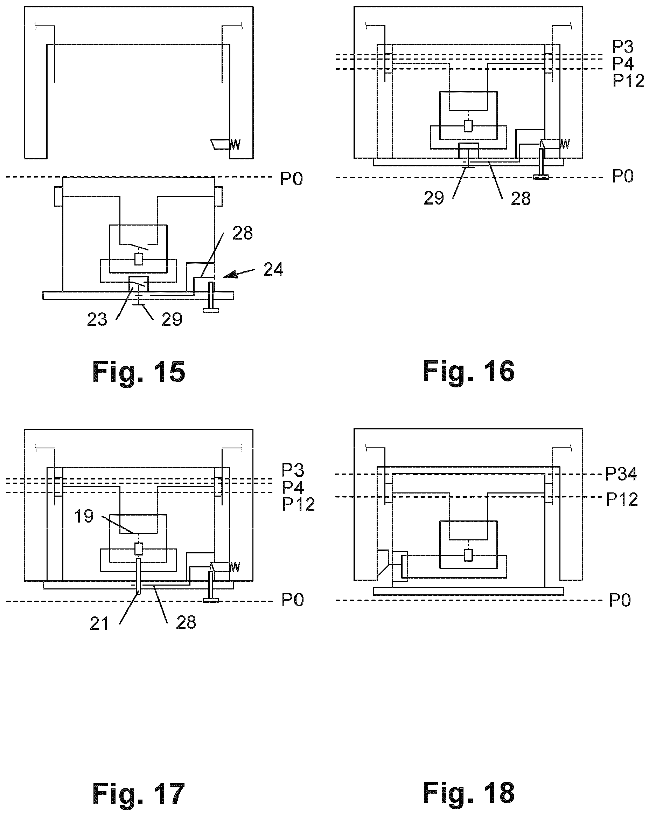

Figs. 15 and 16 now show an embodiment which is similar to that of Fig. 14. In contrast, the electrical system 1 comprises a lock 24 with a spring biased latch 25 and a release button 26 like this has already been disclosed in Figs. 11 and 12. In addition, there is a blocking rod 28, which is part of the safety mechanism. The blocking rod 28 is actuated by the latch 25 and blocks push button 29 of the first switch 23 in the UNLOCKED state of the slide-in unit 3 (see Fig. 15) and releases the push button 29 in the LOCKED state of the slide-in unit 3 (see Fig. 16). Accordingly, the contactor 12 is enabled to be turned ON and OFF in the LOCKED state of the slide-in unit 3 but not in the UNLOCKED state. In this example, the first switch 23 is accessible for an operator on a front side of the slide-in unit 3 (even when the slide-in unit 3 is fully inserted into the compartment A in the switchgear 2). In that, the first switch 23 can be switched ON and OFF by the operator when the first switch 23 is enabled to be switched by the safety mechanism.

Fig. 17 shows an embodiment which is quite similar to that of Figs. 15 and 16. In contrast, there is a push rod 21 acting on the switching contact 19. Here the blocking rod 28 blocks the push rod 21 in the UNLOCKED state of the slide-in unit 3 and releases it in the LOCKED state of the slide-in unit 3. Accordingly, the contactor 12 is enabled to be turned ON and OFF in the LOCKED state of the slide-in unit 3 but not in the UNLOCKED state just like it is the case in the embodiment of Figs. 15 and 16 in view of the first switch 23.

Fig. 18 shows an embodiment where the third slide-in position P3 coincides with the fourth slide-in position P4 and forms a combined third and fourth slide-in position P34. Accordingly, there is no switching hysteresis in Fig. 18 in contrast to the cases shown in Figs. 2 to 17.

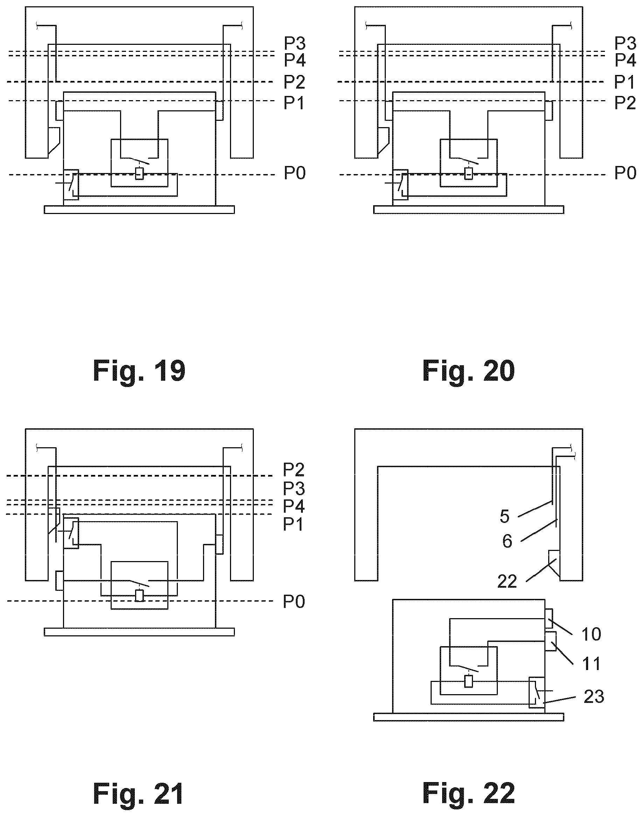

Fig. 19 shows an embodiment with a first slide-in position P1 which is different to the second slide-in position P2. In detail, the first slide-in position P1 is reached before the second slide-in position P2, when the slide-in unit 3 is moved into the compartment A. For this reason, the first switchgear connectors 5 are located more outwards in the compartment A than the second switchgear connectors 6 in this example.

Fig. 20 shows an embodiment which is pretty similar to that of Fig. 19. However, in contrast, the first slide-in position P1 is reached after the second slide-in position P2, when the slide-in unit 3 is moved into the compartment A. For this reason, the first switchgear connectors 5 are located more inwards in the compartment A than the second switchgear connectors 6 in this example.

It should be noted that in both cases of Figs. 19 and 20, the first slide-in position P1 and the second slide-in position P2 are reached before the third slide-in position P3 and the fourth slide-in position P4 (or a combined third and fourth slide-in position P34 as the case may be) when the slide-in unit 3 is moved into the compartment A and afterwards when the slide-in unit 3 is removed from the compartment A.

Fig. 21 shows an embodiment, which is similar to the one of Fig. 19, but in which the third slide-in position P3 is reached before the second slide-in position P2 when the slide-in unit 3 is inserted into the compartment A of the switchgear 2, and the fourth slide-in position P4 is reached after the second slide-in position P2 when the slide-in unit 3 is removed from the compartment A of the switchgear 2. In this case, the contactor 12 is electrically connected to the second switchgear connectors 6 (and thus to an electrical load L for example) after the contactor 12 is switched ON and the contactor 12 is switched OFF after the contactor 12 is electrically disconnected from the second switchgear connectors 6 (and thus from an electrical load L for example). In particular, this embodiment can be used if the second switchgear connectors 6 are de-energized when connecting, because the second slide-in connectors 11 are already connected to the power system P at the time the second slide-in connectors 11 contact the second switchgear connectors 6.

Fig. 22 shows an embodiment to emphasize that the first switchgear connectors 5, the first slide-in connectors 10, the second switchgear connectors 6, the second slide-in connectors 11, the first switch 23 and the switching bump 22 are not mandatorily arranged on different sides of the compartment A of the slide-in unit 3, but may be arranged on the same side as depicted in Fig. 22.

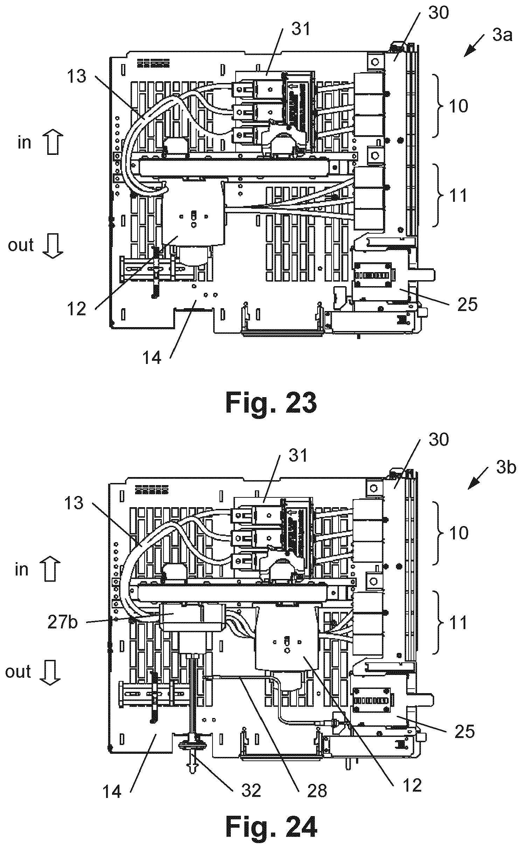

Fig. 23 now shows a more detailed top view on a slide-in unit 3a, which comprises a main body 14 with the contactor 12, a connecting module 30 and a fuse 31 mounted thereto. The connecting module 30 comprises the first slide-in connectors 10 and the second slide-in connectors 11. In detail, the connecting module 30 comprises three first slide-in connectors 10 and three second slide-in connectors 11 (for a three phase system). However, the connecting module 30 may comprise another count of first slide-in connectors 10 and second slide-in connectors 11 as well. Moreover, the slide-in unit 3a comprises a latch 25 for locking the slide-in unit 3a in the compartment A of the switchgear 2.

Fig. 24 shows an embodiment of a slide-in unit 3b, which is pretty similar to the one of Fig. 23. In contrast there is a mechanical second switch 27b switched in series to the contactor 12 and the fuse 31. The second switch 27b comprises an axle 32 for actuating the second switch 27b. The blocking rod 28 blocks the axle 32 in the UNLOCKED state of the slide-in unit 3 and releases the it in the LOCKED state of the slide-in unit 3. Accordingly, the second switch 27b is enabled to be turned ON and OFF in the LOCKED state of the slide-in unit 3 but not in the UNLOCKED state just like it is the case in the embodiment of Figs. 15 to 17.

The blocking rod 28 of Figs. 15 to 17 and 24 can also act on the contactor 12 and can turn OFF the contactor 12 in the UNLOCKED state of the slide-in unit 3 and/or can turn ON the contactor 12 in the LOCKED state of the slide-in unit 3 or can enable the contactor 12 to be turned ON and OFF in the LOCKED state of the slide-in unit 3 just like it was explained in view of the second switch 23b above. In this way, the safety mechanism ensures that the slide-in unit 3 cannot unintentionally be removed of from the compartment A of the switchgear 2 as long as the slide-in unit 3 is connected to the power system P of the switchgear 2 as well.

It should be noted that the slide-in positions P1..P4, P12, P34 in the above examples refer to the backside of the slide-in unit 3. However, this is no necessary condition, and said slide-in positions P1..P4, P12, P34 may refer to any location in the slide-in unit 3 (and in principle may also be located outside of the slide-in unit 3).

Generally, the handle 16 and the push buttons 17 depicted in Fig. 1 may be actuating parts of the contactor 12 (see Fig. 17), the second switch 27a (see Figs 14 to 16, in particular the push button 29), the first switch 23 or the lock 24 (see Figs. 11 and 12, in particular the release button 26).

It is noted that the invention is not limited to the embodiments disclosed hereinbefore, but combinations of the different variants are possible. In reality, the electrical system 1 may have more or less parts than shown in the figures. The electrical system 1 as well as parts thereof may also be shown in different scales and may be bigger or smaller than depicted. Finally, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### LIST OF REFERENCE NUMERALS

- 1: electrical system
- 2: switchgear
- 3, 3a, 3b: slide-in unit
- 4: busbar
- 5: first switchgear connectors

- 6: second switchgear connectors
- 7: frame
- 8: housing
- 9: door
- 10: first slide-in connectors

- 11: second slide-in connectors
- 12: contactor
- 13: electrical path (wiring)
- 14: main body
- 15: front panel

- 16: handle
- 17: push button
- 18: gauge
- 19: switching contact
- 20: control coil / switching coil

- 21: push rod
- 22: switching bump
- 23: first switch
- 24: lock
- 25: latch
- 26: release button
- 27a: second switch (wireless)
- 27b: second switch (mechanically)
- 28: blocking rod
- 29: push button of second switch
- 30: connecting module

- 31: fuse
- 32: axle

- A: compartment
- L: load
- P: power system
- in: insert direction
- out: removal direction

- P0: non-operating position
- P1: first slide-in position
- P2: second slide-in position
- P12: combined first and second slide-in position
- P3: third slide-in position
- P4: fourth slide-in position
- P34: combined third and fourth slide-in position

## Claims

1. Electrical system (1), comprising
i) a switchgear (2) with a compartment (A) for receiving a detachable slide-in unit (3, 3a, 3b),
- a power system (P),
- first switchgear connectors (5), which are electrically connected to the power system (P) and which are arranged in the compartment (A) for the slide-in unit (3, 3a, 3b), and
- second switchgear connectors (6), which are arranged in the compartment (A) for the slide-in unit (3, 3a, 3b), and
ii) the slide-in unit (3, 3a, 3b), which is designed to be inserted in said compartment (A) of the switchgear (2), comprising
- first slide-in connectors (10), which get electrically connected to the first switchgear connectors (5) at a first slide-in position (P1) of the slide-in unit (3, 3a, 3b) when the slide-in unit (3, 3a, 3b) is inserted into the compartment (A) of the switchgear (2) and which get electrically disconnected from the first switchgear connectors (5) at said first slide-in position (P1) when the slide-in unit (3, 3a, 3b) is removed from the compartment (A) of the switchgear (2),
- second slide-in connectors (11), which get electrically connected to the second switchgear connectors (6) at a second slide-in position (P2) of the slide-in unit (3, 3a, 3b) when the slide-in unit (3, 3a, 3b) is inserted into the compartment (A) of the switchgear (2) and which get electrically disconnected from the second switchgear connectors (6) at said second slide-in position (P2) when the slide-in unit (3, 3a, 3b) is removed from the compartment (A) of the switchgear (2),
- a contactor (12) arranged in an electrical path (13) between the first slide-in connectors (10) and the second slide-in connectors (11), wherein the first slide-in connectors (10) are electrically connected to the second slide-in connectors (11) in the ON-state of the contactor (12) and are electrically disconnected from the second slide-in connectors (11) in the OFF-state of the contactor (12),
**characterized in**
- a safety mechanism, which is provided to switch ON the contactor (12) or which is provided to enable switching ON the contactor (12) at a third slide-in position (P3) of the slide-in unit (3, 3a, 3b), wherein the third slide-in position (P3) is reached after the first slide-in position (P1) when the slide-in unit (3, 3a, 3b) is inserted into the compartment (A) of the switchgear (2), and which is provided to switch OFF the contactor (12) at a fourth slide-in position (P4) of the slide-in unit (3, 3a, 3b), wherein the fourth slide-in position (P4) is reached before the first slide-in position (P1) when the slide-in unit (3, 3a, 3b) is removed from the compartment (A) of the switchgear (2).

2. Electrical system (1) according to claim 1, **characterized in that** the third slide-in position (P3) is reached after the second slide-in position (P2) when the slide-in unit (3, 3a, 3b) is inserted into the compartment (A) of the switchgear (2), and the fourth slide-in position (P4) is reached before the second slide-in position (P2) when the slide-in unit (3, 3a, 3b) is removed from the compartment (A) of the switchgear (2).

3. Electrical system (1) according to claim 1, **characterized in that** the third slide-in position (P3) is reached before the second slide-in position (P2) when the slide-in unit (3, 3a, 3b) is inserted into the compartment (A) of the switchgear (2), and the fourth slide-in position (P4) is reached after the second slide-in position (P2) when the slide-in unit (3, 3a, 3b) is removed from the compartment (A) of the switchgear (2).

4. Electrical system (1) according to any one of claims 1 to 3, **characterized in that** the first slide-in position (P1) coincides with the second slide-in position (P2) and forms a combined first and second slide-in position (P12) and/or the third slide-in position (P3) coincides with the fourth slide-in position (P4) and forms a combined third and fourth slide-in position (P34).

5. Electrical system (1) according to any one of claims 1 to 4, **characterized in that** the contactor (12) is the only switching device between the first slide-in connectors (10) and the second slide-in connectors (11).

6. Electrical system (1) according to any one of claims 1 to 4, **characterized in** a fuse (31) arranged in the electrical path (13) between the first slide-in connectors (10) and the second slide-in connectors (11).

7. Electrical system (1) according to claim 6, **characterized in that** the contactor (12) and the fuse (31) are the only current interrupting devices between the first slide-in connectors (10) and the second slide-in connectors (11).

8. Electrical system (1) according to any one of claims 1 to 7, **characterized in that** the safety mechanism is provided to mechanically lock the slide-in unit (3, 3a, 3b) when the slide-in unit (3, 3a, 3b) is fully inserted into the compartment (A) in the switchgear (2).

9. Electrical system (1) according to claim 8, **characterized in that** the safety mechanism is provided
a) to turn OFF the contactor (12) in the UNLOCKED state of the slide-in unit (3, 3a, 3b) and/or
b) to turn ON the contactor (12) in the LOCKED state of the slide-in unit (3, 3a, 3b) or to enable the contactor (12) to be turned ON and OFF in the LOCKED state of the slide-in unit (3, 3a, 3b).

10. Electrical system (1) according to any one of claims 1 to 9, **characterized in that** the safety mechanism comprises a first switch (23), which is electrically connected to the control coil (20) of the contactor (12), wherein the first switch (23) is switched ON or enabled to be switched ON at the third slide-in position (P3) of the slide-in unit (3, 3a, 3b) when the slide-in unit (3, 3a, 3b) is inserted into the compartment (A) of the switchgear, (2) and which is provided to be switched OFF at the fourth slide-in position (P4) of the slide-in unit (3, 3a, 3b) when the slide-in unit (3, 3a, 3b) is removed from the compartment (A) of the switchgear (2).

11. Electrical system (1) according to claim 10, **characterized in that**
i) a second switch (27a, 27b), which is connected in series with the first switch (23), is accessible for an operator on a front side of the slide-in unit (3, 3a, 3b) when the slide-in unit (3, 3a, 3b) is fully inserted into the compartment (A) in the switchgear (2) and/or can be operated by the operator remotely or
ii) said first switch (23) is accessible for an operator on a front side of the slide-in unit (3, 3a, 3b) when the slide-in unit (3, 3a, 3b) is fully inserted into the compartment (A) in the switchgear (2) and/or can be operated by the operator remotely, wherein the first switch (23) can be switched ON by the operator when the first switch (23) is enabled to be switched ON by the safety mechanism.
